# EUROPEAN PATENT SPECIFICATION

(11) **EP 1 703 040 B1**
(45) Date of publication and mention of the grant of the patent: **16.11.2016**
(21) Application number: 05779070.1
(22) Date of filing: 18.08.2005
(51) Int. Cl.: E04F 10/06

(54) **JOINTED ARM ELBOW WITH CONCEALED TENSION ELEMENT**
GELENKKNIESTÜCK MIT EINEM VERDECKTEN SPANNELEMENT
COUDE DE BRAS ARTICULÉ À ÉLÉMENT DE TENSION OCCULTÉ

(43) Date of publication of application: 20.09.2006
(73) Proprietor: GAVIOTA SIMBAC, S.L., 03630 Sax (Alicante) (ES)
(72) Inventor: GUILLEN CHICO, Francisco, E-03630 SAX (ES)
(74) Representative: Carlos Hernando, Borja
(86) International application number: PCT/ES2005/070120
(87) International publication number: WO 2006/021608

(56) References cited:
- DE-A1- 4 225 299
- FR-A- 2 687 186
- FR-A- 2 762 633
- US-A- 5 249 415

## Description

### OBJECT OF THE INVENTION

The present invention refers to a jointed arm element with a concealed tension element applicable to sun blind arms.

The present invention displays an arrangement in which the tension element not only is not visible from the exterior, but also is separated from the inner surface of the joint core, thereby preventing damage to the surface and to the actual tension element.

The tension element used is a chain to which there is incorporated a semi-rigid outer strip and inner strip attached to the chain to prevent relative movements.

The invention comprises a set of particular solutions that permit the linking of the semi-rigid strip or strips and the chain.

### BACKGROUND TO THE INVENTION

The use of jointed elbows with tension elements that provide a tendency of the arm to extend is very common as sun blind supports.

The tendency of the arm to extend assures the tension of the canvas both in partial extension and in full extension.

The types of tension elements used are cables, chains and variations of these. These elements have a spring fastened at one end that is concealed in one of the arms and the other end is attached to the other arm. This tension element passes through the elbow to connect one arm and another one around a winding drum characterised by a certain radius.

The traction gives rise to a moment, which will be the greater, the larger the radius of the winding drum.

Since the arms are rather long in relation to the radii of the joint core and the winding drum, the tension to which the spring is subjected and the component that we have referred to as the tension element is very high.

There are various technical solutions that aim to address two major problems:
- visual access to the tension element since it is located at points where there is a variation in the opening of the cavity where coverage is impaired; and,
- the damage caused by the tension element when resting on the winding drum.

A clear example of the damage caused by the tension element on the winding drum becomes apparent when it is painted.

Extension of the arm involves the turning of the winding drum making the surface damaged on the inside visually accessible.

Not only is the surface of the winding drum damaged, but also, in the event of making use of cables, these are gradually flattened, thus increasing the risk of breakage.

Back in 1984 application was filed for the patent with publication number ES8504352, which mentions the use of cables as tension elements that are guided by means of grooves provided in the joint. This type of joint has no way of preventing damage both to the bearing surface of the cable and to the cable itself.

We are familiar with Utility Model with publication number ES1037250U intended, amongst other purposes, not only to prevent damage, but also to facilitate the replacement of damaged parts. The solution is based on the combined use of a non-through pin transversely to the joint with a special design of the cable grommet that prevents the steel cable from slipping out of its guide when the elbow reaches a given position.

The joint also has a gently elbowed grooved configuration with special gradients of the cable grommet, defining angles that prevent the steel cable from coming out when a certain limit position is passed.

The Utility Model with publication number ES1050685U establishes a configuration of the elbow in such a way that it defines an incomplete central perimeter shoulder in the core of the joint central for passing the anchoring end of a conventional twisted cable to permit the presence of a notch in the female piece. This configuration, together with other details, permits the insertion of a small cover that prevents visual access, from the outer side, both of the cable and of the possible damage that may occur on the surface that it supports.

A very smilar configuration is used in the jointed elbow of the Utility Model with publication number ES1052733U, where the intention now is to make the twisted cables pass through a single perforation or drill hole, thereby achieving a reduction in the inner anular space needed for the passage of the twisted cable, which permits greater structural reinforcement of the wings defining the fastening of the joint pin.

As for the tension elements, the patents with publication number ES2074947 and ES2131448 use flat flexible ribbons or bands, which may be made up of metal filaments integrated internally in a plastic material, gum or rubber. According to the description these elements rest directly on the cylindrical core of the joint. Weight reduction is mentioned as an advantage, but the support surface of the flexible band is not prevented from eventually suffering wear and tear nor the joint surface from being subject to damage either.

Prior art document FR2687186A1, which corresponds to the preamble of claim 1, relates to a support assembly for blind fabric of the type essentially including at least two articulated arms, a fastening support, a load bar, a rolling-up tube and a tension spring located in each of the articulated arms. This support assembly comprises a groove provided in the hub of the articulation, including, in its base plane, a profile, centered with respect to the lateral edges of the articulation, provided with a front face serving as bearing surface for the rollers of the chain and with two lateral faces serving as a guide surface for the side plates (flanges) of the said chain; and the guide piece of the end of the spring includes a passage which is offset with respect to its axis of symmetry so as to position the axis of the chain in a position coinciding with the axis of symmetry of the profile for bearing and guiding the latter. This document does not describe an outer and an inner strip attached to the chain by a window so that said strips move with the chain.

The present invention overcomes the drawbacks of wear and offers a solution that gives rise to very long joint life.

### DESCRIPTION OF THE INVENTION

The present invention consists of a jointed arm with the tension element concealed so that not only is it not visually accessible in any of the degrees of extension of the joint, but also the winding element support does not cause damage to this bearing surface.

The jointed arm consists of two rods connected by way of an elbow, which is provided with a winding drum. As appears in the prior art, one of the arm rods is fitted internally with a spring that is concealed and connected to the tension element at one of its ends. The other end of the tension element is located on the other side of the elbow, where it is attached to the other rod of the jointed arm.

In the invention the tension element is a chain that encircles the winding drum and is anchored on the opposite arm rod.

If the chain support on the winding drum damages its surface, if painted for instance, the paint disappears or is scratched, then when the arm extends, the damaged surface becomes visible on the inner side, since it is the position in which the chain rests to a lesser extent.

To prevent the support of the chain links from damaging the surface of the winding drum, a semi-rigid strip is incorporated, interposed between the chain and the support surface.

A second outer semi-rigid strip may be interposed, not necessarily of the same material as the requirements are not the same, which covers the chain so that it is concealed.

It is considered that although the best solution for chain protection is to provide , according to the invention, the outer and the inner strip at the same time, and this is how it will be developed in the course of the detailed description of all the specimen embodiments, it is possible to apply a partial solution which is outside the scope of this invention in which the chain is only protected either on the outside or the inside.

The use of the term semi-rigid should be construed as its having sufficient rigidity so as not to show the texture of the surface on which it rests (for instance, the undulations of the chain), but being sufficiently flexible in order to be able to adapt to the curvature imposed on it by the turning of the elbow in all its positions.

The arm bending and extending movement gives rise to a relative movement between the outer strip, the inner strip and the chain. If these strips are not dependized or linked to the chain in some way, bending and extension give rise a relative movement which causes them to become detached sooner or later.

This same invention covers the means of establishing a connecting link between the strip or strips and the chain, whereby the link consists of a configuration by means of an outer strip and an inner one, in such a way that they form a single U-shaped strip with a window at the bend. The end of the chain is anchored to the arm rod by way of this window.

Although the window locks the single strip, it is preferable to include additional fastening elements to prevent the relative movement of the outer strip section and the inner strip section.

A first solution is to include side castellations on both sections that engage with projections on the chain. In this way, the chain projections define the position of the ends where both the outer and inner section of strip start out, thus preventing their relative movement.

If this initial means of fastening is on the side of the "U" strip window, a second means establishes attachment at the free ends opposite the window. This second means consists of incorporating traction or compression springs according to different configurations that assure the tension of the strips. In the specimen embodiment section three examples will be developed with different means of execution. A first configuration consists of the use of a spring on each section of the single strip.

A second configuration consists of a traction spring, and a third configuration comprises a compression spring on the outer strip too. The spring tension keeps the strips taut in their position all the time, while the inspection window or the link with the chain serves to define their correct position.

The word spring is used generically as an elastic element that may be made up of one or more springs, elastic bands, etc.

In addition, the single strip may be provided with internally jutting edges defining the inner surface in the form of a channel in which the chain is housed. This internal arrangement successfully guides the chain, so it is prevented from moving sideways and ceases to rest on the single strip.

These means for guiding the strips so that they accompany the chain all the time may be composed of an essentially rectangular section shape, which houses the chain.

The outer and inner walls of this essentially rectangular section shape act as a support and cover strip, respectively, and the side walls establish the mechanical dependence between both.

The same invention contemplates the possibility of combining the strips as described along with the shape housing the assembly in the form of a sheath.

This invention involves high pressures which are established between the chain and the winding drum due to the tension of the main spring. This pressure is the origin of the surface damage on the winding drum and which is prevented by the interposition of the inner strip.

Since this pressure is now transmitted by way of the inner strip which is interposed, the invention contemplates the utilization of this pressure to prevent the main pin from coming out.

The main pin is notched, preferably in the central or in the coinciding area, whereby it determines the position of the single strip where the chain rests, in such a way that this notch receives a grub screw that stops it from coming out.

The coincidence of the permetral position of the notch in relation to the inner strip enables the grub screw to remain just below the inner strip, so that, being pressed constantly by the latter, it is prevented from working loose.

### DESCRIPTION OF THE DRAWINGS

The present descriptive report is supplemented with a set of drawings, illustrating the preferred embodiment but never restricting the invention.
Figure 1A contains two views of the same elbow, leaving the rods that extend on either side interrupted.
Figure 1B shows sections A-A and B-B of the assembly in figure 1A, in which a flexible single strip, the main pin and the grub screw preventing it from coming out may be observed.
Figure 1C is a representation of the end of the joint with the elbow bent, on which a section C-C - shown enlarged - has been carried out, identifying the chain with the outer and inner strips, as well as the grub screw retaining the pin, which is located below the inner strip.
Figure 2A is a perspective view of a representation which is not part of the invention, consisting of a chain with two strips, one arranged on the outside and the other on the inside, with the whole assembly housed in a flexible shape.
Figures 2B and 2C are a sectional and side view of the assembly in figure 2A, slightly curved according to the directrix it adopts when the arm is extended.
Figures 2D and 2E are the sectional and side view of the assembly of figure 2A, fully curved according to the directrix that it adopts when the arm is bent.
Figure 3 is a perspective representation of a single strip according to the invention with a central window as a specimen chain protection means, in one view in which it is shown extended and in another view in which it is shown bent in "U" form.
Figure 4 is a perspective view of a single strip with a central window, side castellations and inner fastening projections plus lateral edge projections as a specimen execution of the chain protection means, in one view in which it is shown extended and in another view in which it is shown bent in "U" form.
Figure 5 presents a specimen execution of a chain protection means based on a particular structure of a flexible shape.
Figure 6 is a specimen execution of a chain protection means which includes a single "U" strip with springs at its ends to maintain the tension and, in this way, alignment with the chain.
Figure 7 is a perspective view of an arrangement in which a single flexible "U" strip is included, with a traction spring attached to its outer strip.

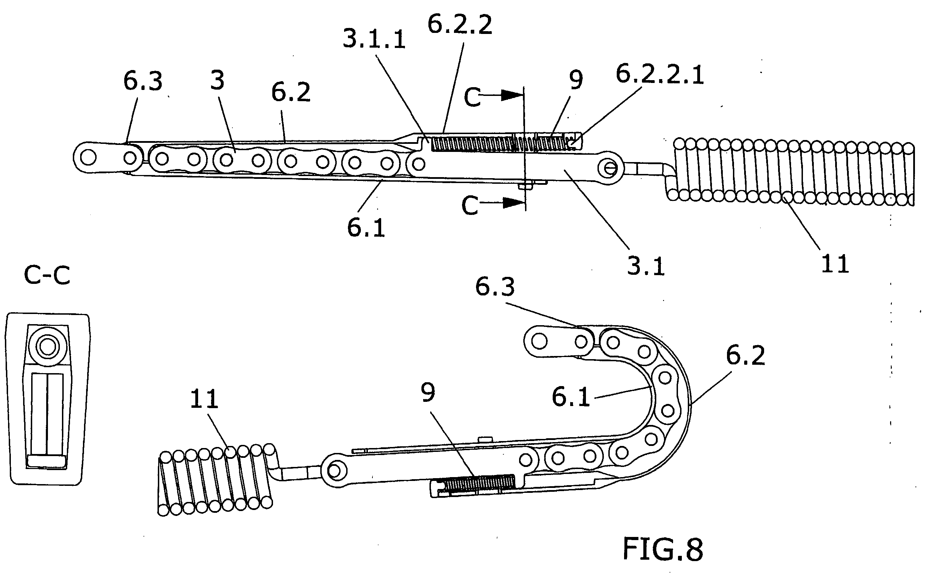

Figure 8 is a longitudinal section showing a specimen execution of a protection means that includes a single flexible "U" strip with a compression spring attached to its outer strip.

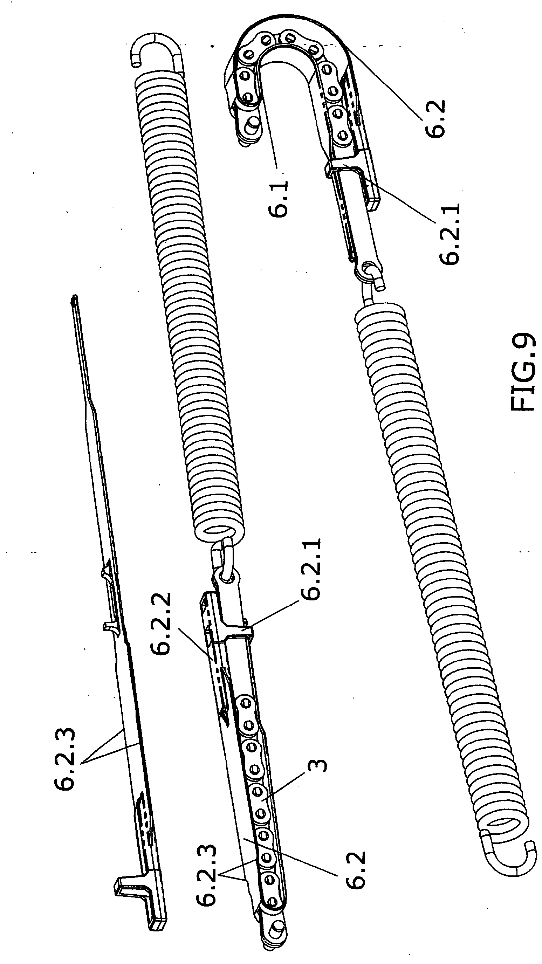

Figure 9 is a perspective view of the arrangement with a compression spring in which an inner notch may be observed in the flexible outer "U" strip attached, where the spring is housed.

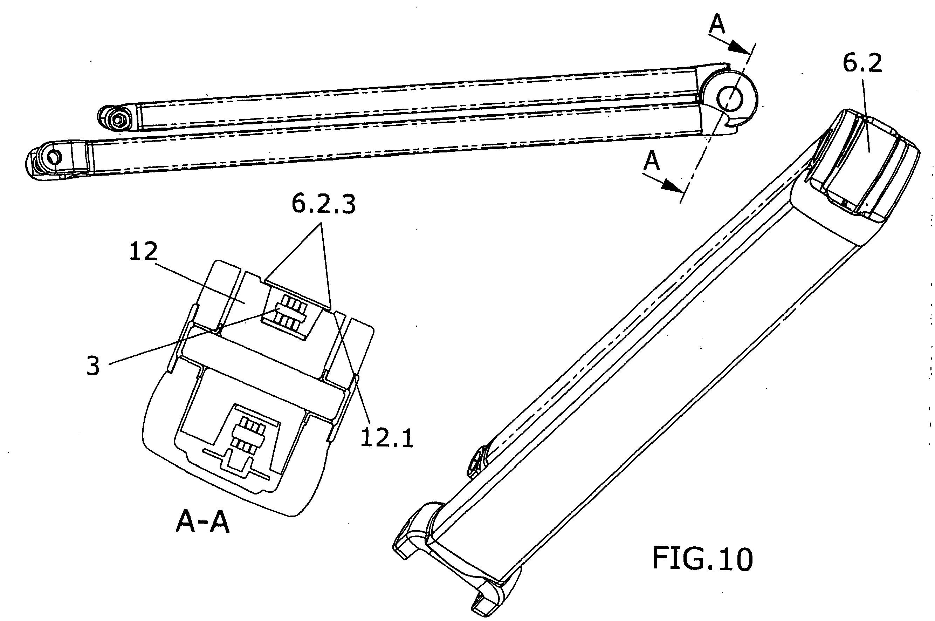

Figure 10 is a perspective view of the jointed arm elbow in which a flaring may be observed in the flexible outer "U" strip attached, which rests in a circumferential undercut in order to conceal the chain.

### SPECIMEN EMBODIMENTS OF THE INVENTION

The present invention consists of a jointed arm with the tension element concealed, wherein the aim is to protect the winding drum where the tension element rests with great pressure, and at the same time to prevent visual access to this same element.

With the assistance of the figures we describe a set of particular examples of embodiment with different details of execution, in which the description offered is of a more general nature.

In the case in which the link between one strip or strips and the chain consists of a joint using a lug or any other fastening means, for instance, with inter-pin anchorage, this has not been represented on account of its simplicity and we go on to describe the other arrangements that are considered of greater interest from the descriptive point of view.

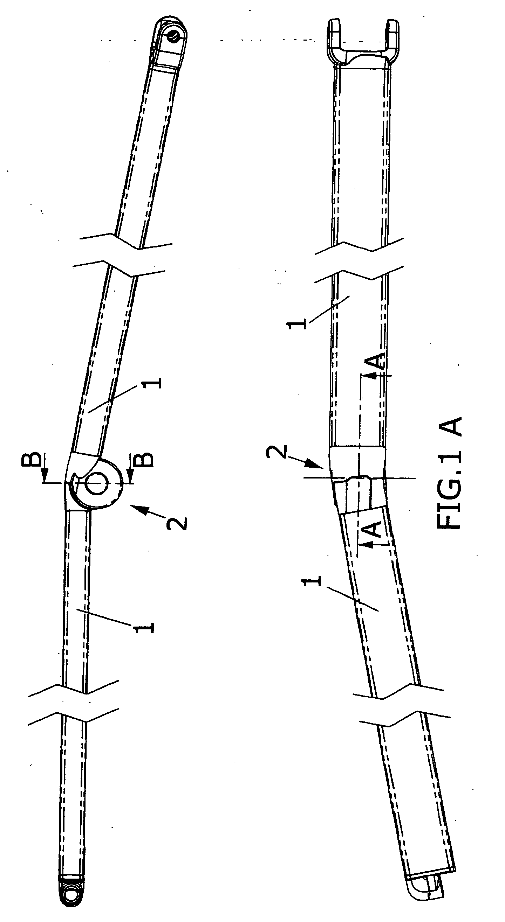

Figure 1A shows a jointed arm with a central elbow of the type used on sun blinds. Only the central portion of the elbow is shown, as the ends are merely means of connection with the load bar on the one hand and with the main structure of the sun blind on the other.

This jointed arm is provided, internally to one of the rods (1), with a spring which is what endows the tension element that is the object of this invention with sufficient tension for the joint (2) to maintain its tendency to open and for the load bar to keep the sun blind extended.

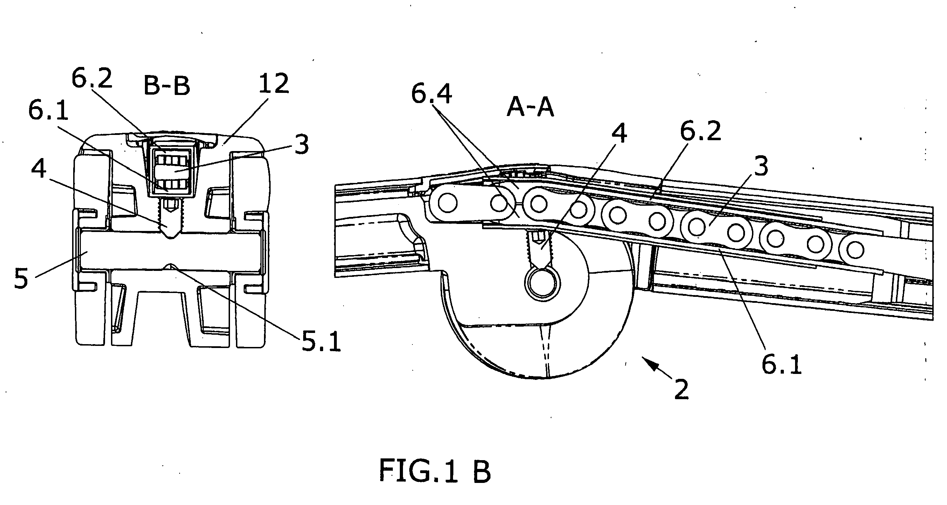

In figure 1B we observe the tension element made up of a chain (3) protected both externally, so that it is not accessible visually in any position of extension of the joint, and internally, in order to prevent the winding drum (12) on which it rests from being damaged.

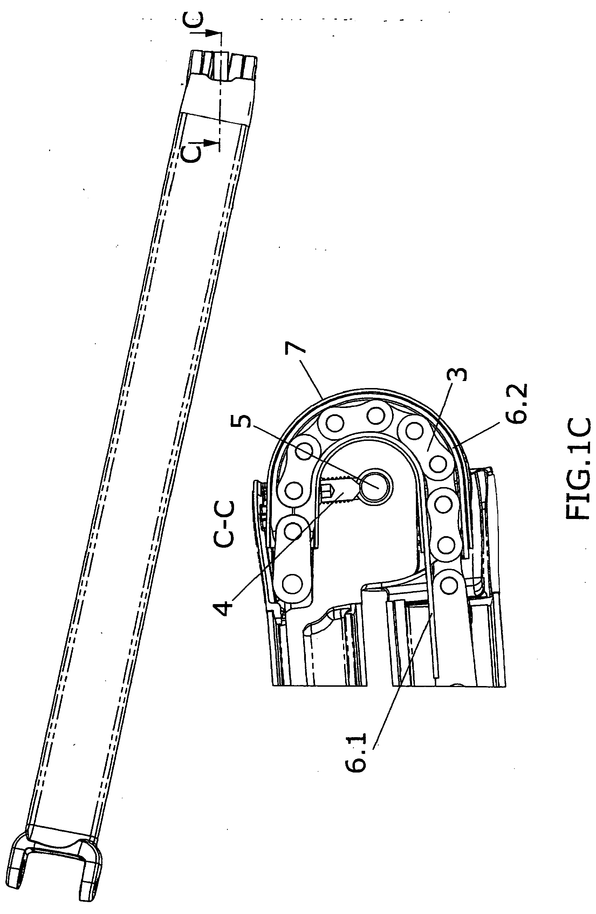

Figure 1C shows a close view of a grub screw (4) that utilizes the pressure exerted by the inner strip (6.1) against the winding drum to prevent this grub screw from working loose. The grub screw (4) coincides in position with the inner strip (6.1), so it is exerting pressure on the head of the grub screw (4)all the time. The grub screw (4), in turn, exerts pressure in a central notch (5.1)(shown in Figure 1 B) in the pin (5). As the grub screw cannot come out of place, this means that the pin (5) cannot either, thereby increasing the working reliability of the joint (2) elbow.

The figures identified with number 2 are representations that clearly illustrate the problem that is resolved by the present invention.

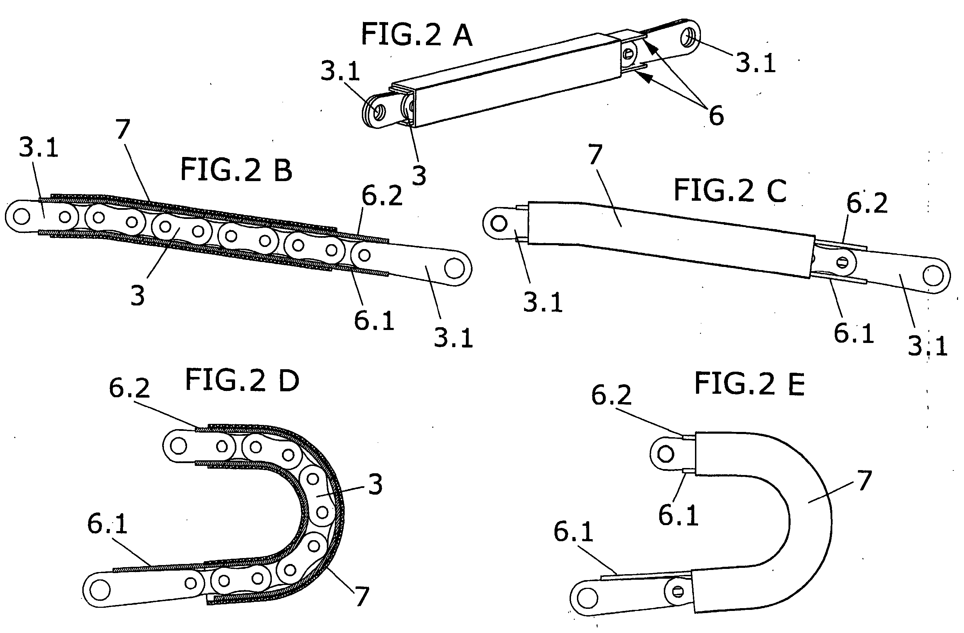

Figure 2A shows a perspective view of the chain (3) with the anchoring links (3.1) for traction that are each provided above and below with respective protection strips (6).

The inner strip (6.1) is the one that receives the stress through resting against the winding drum (not represented in these figures 2), and the outer strip (6.2) prevents the appearance of a relief due to the presence of the chain (3) links.

To maintain the position of the strips (6) above and below the chain (3), the assembly is enclosed by a square section shape(7).

Figures 2B and 2C represent the tension element extended, with a slight curvature that appears when installed with the arm extended. It may be observed that essentially the two strips (6) protrude the same distance on either side.

Figures 2D and 2E represent the same tension element but curved, because, when the joint (2) elbow is bent, the tension element rests on the winding drum all round. This curvature that it adopts means that the perimeter development for a smaller radius like the inside one is of smaller length than the development for a larger radius, like the outside one. The result is shown in figures 2E and 2D where it is observed that the inner strip (6.1) protrudes to a greater extent on one of the sides, because it has encountered some kind of impediment on the other side, for instance that the end of the square section shape can go no farther and the friction between the chain and the drum traps the strip, while the other is free. When returning to the initial position, if the inner strip (6.1) did not slide in the opposite direction to regain the starting position, it would suffice for the impediment of one end only to take place in one direction, then the strips would get out of phase, or what amounts to the same, they would move away from their original position.

The invention establishes means of mechanical dependence between the inner (6.1) and outer (6.2) strip so that the strips do not come out of place and cease to offer the protection for which they are designed.

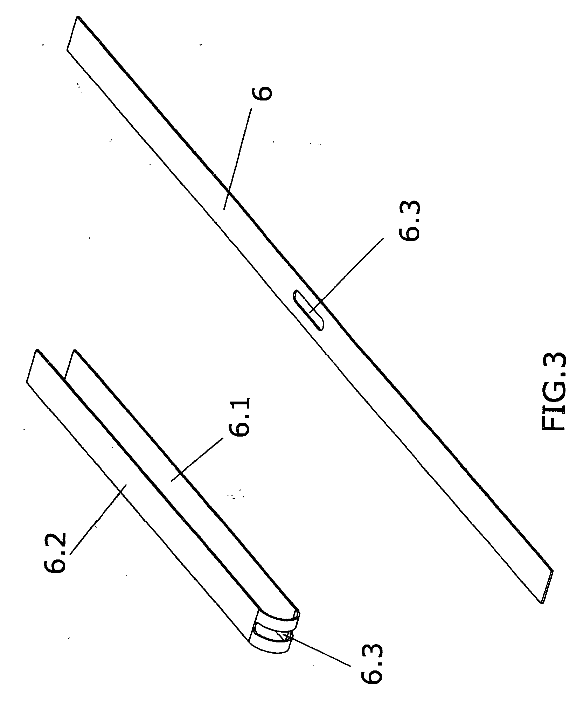

Figure 3 shows a single strip (6) with a central window (6.3). Making use of this single strip (6) in a "U" configuration, by the passing of the anchoring link (3.1) an inspection port is achieved that prevents relative movement between the outer strip section (6.2) and the inner strip section (6.1). Although this is an initial solution contemplated in this invention, additional elements have been introduced that enhance the performance and life of this protection.

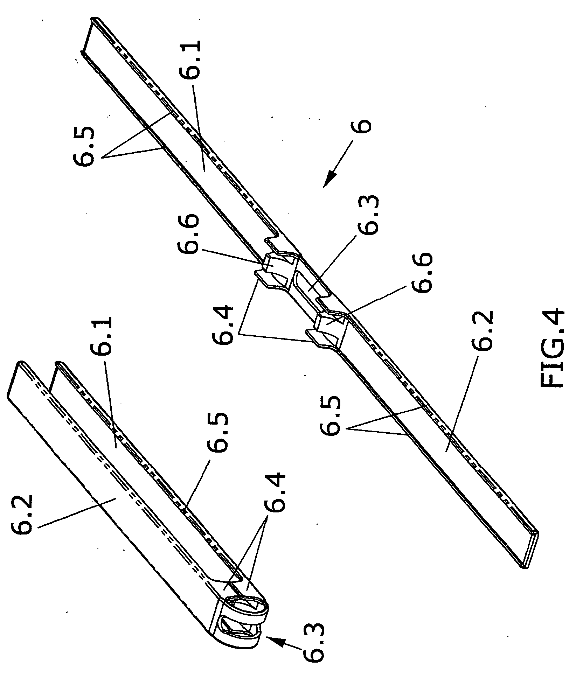

Figure 4 shows a piece consisting also of a single strip (6) with a central window (6.3) that lets the anchoring link (3.1) - not shown here - pass through. The "U" bending means that one section of the strip is disposed on the outside (6.2) and the other section (6.1) is disposed on the inside.

At the sides of the strip and close to the window (6.3) there are castellations (6.4) such that after "U" bending they are aligned and engage or adapt to the stepped faces of the chain (3). These castellations (6.4) prevent relative movement with the chain (3). In addition, the same figure shows a projection (6.6) on either side of the window (6.3) which engages in the chain (3), assisting this attachment to same chain (3).

The symmetrical arrangements used in these examples are not essential.

For instance, the castellations (6.4) could be provided on one side only and be extended in length as far as the other side.

Lastly, in Figure 4 we may observe some edge shoulders (6.5) that assist the guiding of the chain (3) so that it does not come off sideways.

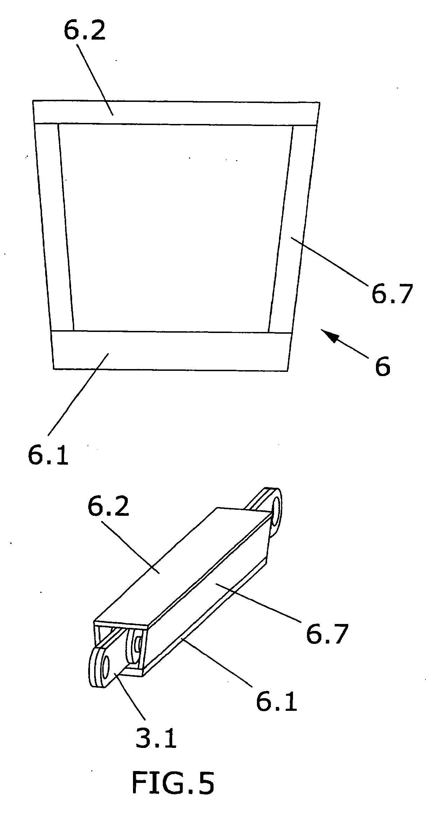

According to another example of the invention, figure 5 shows a single strip (6) body composed of two strips, one outer (6.2) and the other inner (6.1), both connected by means of respective side walls (6.7). The outer (6.2) and inner (6.1) strips are semi-rigid, while the side walls (6.7) are flexible. Particular cases of semi-rigid materials are polyethylene or polypropylene, whereas the flexible side walls are, for example, made of self-vulcanizable rubber. It has already been argued that a semi-rigid material can adapt to the curvature imposed by bending the arm but does not adapt to the relief of the chain (3), while a flexible material like that of the walls is capable of adopting the circular sector form required by the bending of the assembly formed with the chain (3). Both materials may be obtained by means of bi-injection or co-extrusion.

This solution may also be combined with inner strips independent of the essentially rectangular section shape (7), as was initially represented in figures 2, providing that these strips are dependized somehow in accordance with means described. In this case the outer shape may be or like that specified by means of bi-injection or co-extrusion or else entirely of flexible material.

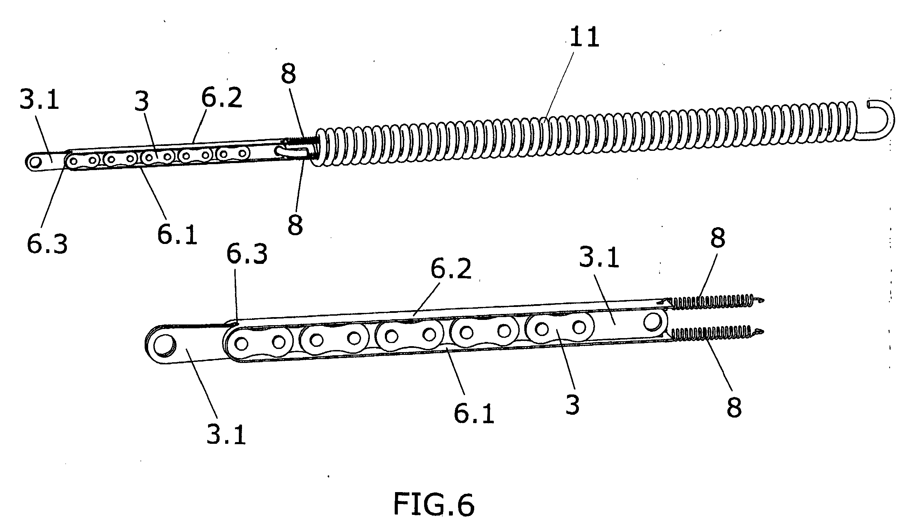

An alternative solution is to keep the dependized strips guided, as they are represented in Figure 6 along with the main spring (11) and in detail, consists of making use of additional springs (8) that pull on the free ends of the single "U" bent strip (6) with window (6.3).

It is the actual traction which keeps the chain (3) aligned with the sections of outer (6.2) and inner (6.1) strip.

Another embodiment to ensure that the strips (6.1, 6.2) of the single strip (6) remain extended and guided consists of the use of a spring (9, 10) that only pulls the outer strip (6.2) as there is no need to pull the inner strip (6.1) since its relative rigidity assures its extension at all times.

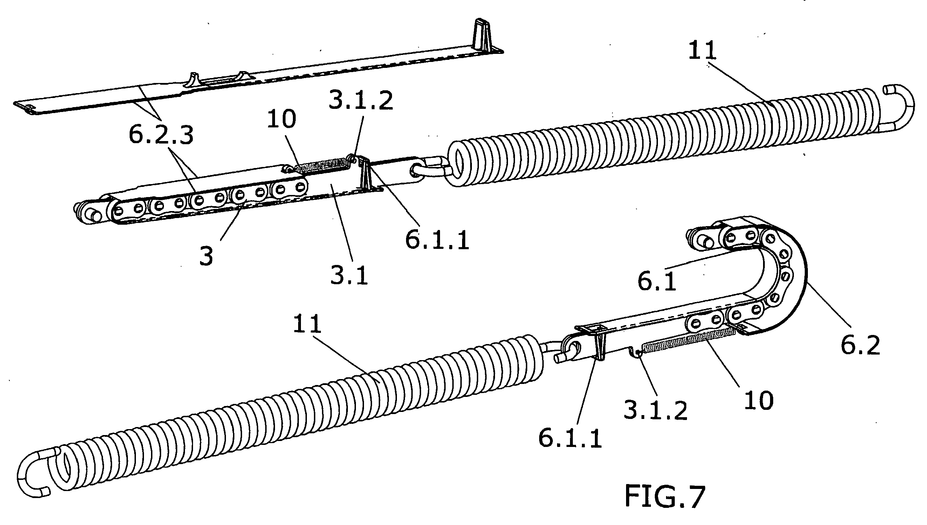

In the specimen embodiment of Figure 7 the aim is to guide the outer strip (6.2) in such a way that it is not moved sideways and is not twisted. This is achieved by means of a bridge (6.1.1) which encircles the end anchoring link (3.1), so that it only permits its longitudinal movement. In this example the outer strip (6.2) is pulled by means of a traction spring (10) which engages at one end in a shoulder (3.1.2) of the end anchoring link (3.1) and in the outer strip (6.2) at the other.

However, in an improved embodiment an attempt has been made to prevent the spring from pulling as, if a fastening should become detached, the release of the spring could prove dangerous.

In this improved embodiment use is made of a compression spring (9) resting on a lug (6.2.2.1) provided at the end of a slot (6.2.2) in the outer strip (6.2) and at the other on a shoulder (3.1.1) on the end anchoring link (3.1). The spring (9) is contained in the "U" section slot (6.2.2) to prevent buckling.

The inner strip (6.1) is guided by a bridge (6.2.1) that starts out from the outer strip (6.2) slot (6.2.2) and encircles the end anchoring link (3.1). The entry of the inner strip (6.1) in the end portion of said bridge (6.2.1) is achieved by defining the end of the inner strip (6.1) in the form of an arrowhead.

The chain (3) is not compressed by the tension of the springs (9, 10) due to the considerable differences in loads between springs (9, 10) and the main spring (11), the former being negligible compared with that of the main spring.

An advantage of both configurations is that, once the protection strip is set in place, the whole traction assembly forms a single body which remains stable and handleable, without pieces being able to fall out, which is reflected in easier and shorter assembly time.

All the above-described configurations have a flaring (6.2.3) in the outer strip (6.2) that enables it to rest on a step (12.1) on the winding drum (12), so that contact is prevented between the outer strip (6.2) and the chain (3).

## Claims

1. A jointed arm, comprising two rods (1) connected by way of an elbow in a joint (2), wherein the elbow is provided with a winding drum, one of the rods (1) comprises a tension element that is concealed, the tension element is composed essentially of a chain (3), and the jointed arm incorporates a main tension spring (11) for the return of the arm extension, concealed in one of the rods (1), said spring (11) being connected to one end of the chain (3) while the other end of the chain (3) is connected to the other arm rod (1) passing by and resting on the winding drum disposed at the joint (2), whereby the chain (3) has an anchoring link (3.1), and **characterized in that** the jointed arm comprises an outer strip (6.2) and an inner strip (6.1), both semi-rigid and attached to the chain (3) by a central window (6.3) provided in a single strip (6) bent in "U" form, which gives rise to one section of the single strip (6) being the outer strip (6.2) and another section of the single strip (6) being the inner strip (6.1), assuring that the said strips (6.1, 6.2) move with the chain (3), thereby accompanying the configuration of the chain (3) in any of its positions as it turns around the winding drum.

2. Jointed arm according to claim 1, **characterized in that** the single strip (6) has traction springs (8) provided at the free ends to maintain the traction and the alignment of both sections of the strip with the chain (3).

3. Jointed arm according to claim 1, **characterized in that** the inner strip (6.1) assures its extension at all times owing to its rigidity, with the outer strip (6.2) being pulled by a spring (8).

4. Jointed arm according to claim 3, **characterized in that** the single strip (6) has a compression spring (9) fitted between the outer strip (6.2) and the end anchoring link (3.1) of the chain (3) that pulls the outer strip (6.2) and a bridge (6.2.1) that guides the inner strip (6.1).

5. Jointed arm according to claim 4, **characterized in that** the compression spring (9) is contained in a "U"-section slot (6.2.2), so as to prevent its buckling, resting at one end on a lug (6.2.2.1) in the slot (6.2.2) and at the other end on a shoulder (3.1.1) of the end anchoring link (3.1) of the chain (3).

6. Jointed arm according to claim 3, **characterized in that** the single strip (6) has a traction spring (10) connected at one end to the outer strip (6.2) and at the other to the end anchoring link (3.1) of the chain (3), keeping the outer strip (6.2) taut, while also having a bridge (6.1.1) that guides the inner strip (6.1) upon encircling the end anchoring link (3.1).

7. Jointed arm according to claim 1, **characterized in that** the outer strip (6.2) has a flaring (6.2.3) which permits its support on a step (12.1) in the winding drum (12), so that the outer strip (6.2) is prevented from resting on the chain (3).

8. Jointed arm according to claim 1, **characterized in that** the protection single strip (6) is provided with edge shoulders (6.5) facing inwards that assist the single strip (6) in following the chain (3) without their moving sideways between one another.

9. Jointed arm according to claim 1, **characterized in that** the outer (6.2) and inner (6.1) strips are enclosed in a flexible shape along with the chain (3).

10. Jointed arm according to claim 1, **characterized in that** the outer (6.2) and inner (6.1) strips are linked laterally by two side walls forming an essentially rectangular section shape.

11. Jointed arm according to claim 10, **characterized in that** the outer and inner strips (6.1, 6. 2) of the co-extruded shape are semi-rigid and the sidle walls flexible.

12. Jointed arm according to claim 11, **characterized in that** the outer and inner strips (6.1, 6. 2) are polyamide, polyethylene or polypropylene.

13. Jointed arm according to claim 11, **characterized in that** the side walls are of rubber or gum.

14. Jointed arm according to claim 1, **characterized in that** it is provided with a grub screw (4) of suitable length for it to be trapped by the inner strip (6.1) at one end and to be accommodated in a central notch in a pin (5) at the other end for the fastening of the pin (5).

## Patentansprüche

1. Gelenkarm umfassend zwei Stangen (1), die durch einen Ellbogen in einem Gelenk (2) verbunden sind, wobei der Ellbogen mit einer Wickeltrommel versehen ist, wobei eine der Stangen (1) ein Spannelement umfasst, das verborgen ist, wobei das Spannelement im Wesentlichen aus einer Kette (3) besteht, und der Gelenkarm eine Hauptspannfeder (11) enthält zum Rückführen der Armverlängerung, die in einer der Stangen (1) verborgen ist, wobei die Feder (11) an einem Ende der Kette (3) verbunden ist, während das andere Ende der Kette (3) mit der anderen Armstange (1) verbunden ist, die vorbeiläuft und auf der Wickeltrommel ruht, die an dem Gelenk (2) angeordnet ist, wobei die Kette (3) ein Verankerungsglied (3.1) aufweist, und **dadurch gekennzeichnet, dass** der Gelenkarm einen äußeren Streifen (6.2) und einen inneren Streifen (6.1) umfasst, die beide halbstarr und an der Kette (3) durch ein mittleres Fenster (6.3) befestigt sind, das in einem einzelnen Streifen (6) vorgesehen ist, der "U-"förmig gebogen ist, welcher zu einem Abschnitt des einzelnen Streifens (6), der der äußere Streifen (6.2) ist, und einem anderen Abschnitt des einzelnen Streifens (6), der der innere Streifen (6.1) ist, führt, wobei sichergestellt wird, dass sich die Streifen (6.1, 6.2) mit der Kette (3) bewegen, wodurch die Konfiguration der Kette (3) in einer beliebigen ihrer Positionen begleitet wird, wenn sie sich um die Wickeltrommel dreht.

2. Gelenkarm nach Anspruch 1, **dadurch gekennzeichnet, dass** der einzelne Streifen (6) Zugfedern (8) aufweist, die an den freien Enden vorgesehen sind, um den Zug und die Ausrichtung beider Abschnitte des Streifens mit der Kette (3) beizubehalten.

3. Gelenkarm nach Anspruch 1, **dadurch gekennzeichnet, dass** der innere Streifen (6.1) seine Ausdehnung jederzeit sicherstellt aufgrund seiner Starrheit, wobei der äußere Streifen (6.2) von einer Feder (8) gezogen wird.

4. Gelenkarm nach Anspruch 3, **dadurch gekennzeichnet, dass** der einzelne Streifen (6) eine Druckfeder (9) aufweist, die zwischen dem äußeren Streifen (6.2) und dem Endverankerungsglied (3.1) der Kette (3) eingepasst ist, die den äußeren Streifen (6.2) und eine Brücke (6.2.1), die den inneren Streifen (6.1) führt, zieht.

5. Gelenkarm nach Anspruch 4, **dadurch gekennzeichnet, dass** die Druckfeder (9) in einem "U-"Abschnittschlitz (6.2.2) enthalten ist, um sein Knicken zu verhindern, wobei sie an einem Ende auf einem Vorsprung (6.2.2.1) in dem Schlitz (6.2.2) und an dem anderen Ende auf einer Schulter (3.1.1) des Endverankerungsglieds (3.1) der Kette (3) ruht.

6. Gelenkarm nach Anspruch 3, **dadurch gekennzeichnet, dass** der einzelne Streifen (6) eine Zugfeder (10) aufweist, die an einem Ende mit dem äußeren Streifen (6.2) und an dem anderen Ende mit dem Endverankerungsglied (3.1) der Kette (3) verbunden ist, wobei der äußere Streifen (6.2) straff gehalten wird, während er auch eine Brücke (6.1.1) aufweist, die den inneren Streifen (6.1) nach dem Einkreisen des Endverankerungsglieds (3.1) führt.

7. Gelenkarm nach Anspruch 1, **dadurch gekennzeichnet, dass** der äußere Streifen (6.2) eine Bördelung (6.2.3) aufweist, welche es ihm ermöglicht, an einer Stufe (12.1) in der Wickeltrommel (12) derart getragen zu werden, dass verhindert wird, dass der äußere Streifen (6.2) auf der Kette (3) ruht.

8. Gelenkarm nach Anspruch 1, **dadurch gekennzeichnet, dass** der einzelne Schutzstreifen (6) mit Randschultern (6.5) versehen ist, die nach innen gerichtet sind, die das Folgen des einzelnen Streifens (6) der Kette (3) dazwischen ohne seitliche Bewegung unterstützen.

9. Gelenkarm nach Anspruch 1, **dadurch gekennzeichnet, dass** die Außenstreifen (6.2) und Innenstreifen (6.1) in einer biegsamen Form zusammen mit der Kette (3) eingeschlossen sind.

10. Gelenkarm nach Anspruch 1, **dadurch gekennzeichnet, dass** die Außenstreifen (6.2) und Innenstreifen (6.1) seitlich durch zwei Seitenwände verknüpft sind, die eine im Wesentlichen rechteckige Abschnittsform bilden.

11. Gelenkarm nach Anspruch 10, **dadurch gekennzeichnet, dass** die äußeren und inneren Streifen (6.1, 6.2) der koextrudierten Form halbstarr sind und die Seitenwände biegsam sind.

12. Gelenkarm nach Anspruch 11, **dadurch gekennzeichnet, dass** die äußeren und inneren Streifen (6.1, 6.2) Polyamid, Polyethylen und Polypropylen sind.

13. Gelenkarm nach Anspruch 11, **dadurch gekennzeichnet, dass** die Seitenwände aus Kautschuk oder Gummi bestehen.

14. Gelenkarm nach Anspruch 1, **dadurch gekennzeichnet, dass** er mit einem Gewindestift (4) mit einer Länge versehen ist, die geeignet ist, damit er von dem inneren Streifen (6.1) an einem Ende gefangen ist und in einer zentralen Kerbe in einem Stift (5) an dem anderen Ende zum Befestigen des Stifts (5) aufgenommen ist.

## Revendications

1. Bras articulé, comprenant deux tiges (1) connectées au moyen d'un coude dans une articulation (2), dans lequel le coude est pourvu d'un tambour d'enroulement, l'une des tiges (1) comprend un élément de tension qui est dissimulé, l'élément de tension est composé essentiellement d'une chaîne (3), et le bras articulé incorpore un ressort de tension principal (11) pour le retour de l'extension de bras, dissimulé dans l'une des tiges (1), ledit ressort (11) étant connecté à une extrémité de la chaîne (3) alors que l'autre extrémité de la chaîne (3) est connectée à l'autre tige de bras (1) passant par et reposant sur le tambour d'enroulement disposé sur l'articulation (2), de sorte que la chaîne (3) a une liaison d'ancrage (3.1), et **caractérisé en ce que** le bras articulé comprend une bande externe (6.2) et une bande interne (6.1), toutes les deux semi-rigides et unies à la chaîne (3) par une fenêtre centrale (6.3) prévue dans une bande unique (6) pliée en forme de « U », qui donne lieu à une section de la bande unique (6) étant la bande externe (6.2) et une autre section de la bande unique (6) étant la bande interne (6.1), garantissant que lesdites bandes (6.1, 6.2) se déplacent avec la chaîne (3), accompagnant ainsi la configuration de la chaîne (3) dans l'une quelconque de ses positions pendant qu'elle tourne autour du tambour d'enroulement.

2. Bras articulé selon la revendication 1, **caractérisé en ce que** la bande unique (6) a des ressorts de traction (8) prévus aux extrémités libres pour maintenir la traction et l'alignement des deux sections de la bande avec la chaîne (3).

3. Bras articulé selon la revendication 1, **caractérisé en ce que** la bande interne (6.1) garantit son extension à tout moment dû à sa rigidité, avec la bande externe (6.2) étant tirée par un ressort (8).

4. Bras articulé selon la revendication 3, **caractérisé en ce que** la bande unique (6) a un ressort de compression (9) introduit entre la bande externe (6.2) et la liaison d'ancrage d'extrémité (3.1) de la chaîne (3) qui tire la bande externe (6.2) et un pont (6.2.1) qui guide la bande interne (6.1).

5. Bras articulé selon la revendication 4, **caractérisé en ce que** le ressort de compression (9) est contenu dans une rainure en section en « U » (6.2.2), afin d'empêcher son gauchissement, se reposant sur une extrémité sur une butée (6.2.2.1) dans la rainure (6.2.2) et à l'autre extrémité sur un épaulement (3.1.1) de la liaison d'ancrage d'extrémité (3.1) de la chaîne (3).

6. Bras articulé selon la revendication 3, **caractérisé en ce que** la bande unique (6) a un ressort de traction (10) connecté par une extrémité à la bande externe (6.2) et par l'autre à la liaison d'ancrage d'extrémité (3.1) de la chaîne (3), maintenant la bande externe (6.2) tendue, tout en ayant également un pont (6.1.1) qui guide la bande interne (6.1) après avoir encerclé la liaison d'ancrage d'extrémité (3.1).

7. Bras articulé selon la revendication 1, **caractérisé en ce que** la bande externe (6.2) a un évasement (6.2.3) qui permet son support sur un cran (12.1) dans le tambour d'enroulement (12), afin d'empêcher la bande externe (6.2) de reposer sur la chaîne (3).

8. Bras articulé selon la revendication 1, **caractérisé en ce que** la bande unique de protection (6) est pourvue d'épaulements de bord (6.5) qui s'orientent vers l'intérieur qui aident la bande unique (6) à suivre la chaîne (3) sans leur mouvement latéral entre eux.

9. Bras articulé selon la revendication 1, **caractérisé en ce que** les bandes externes (6.2) et internes (6.1) sont fermées dans une forme flexible le long de la chaîne (3).

10. Bras articulé selon la revendication 1, **caractérisé en ce que** les bandes externes (6.2) et internes (6.1) sont reliées latéralement par deux parois latérales formant une forme essentiellement de section rectangulaire.

11. Bras articulé selon la revendication 10, **caractérisé en ce que** les bandes externes et internes (6.1, 6.2) de la forme co-extrudée sont semi-rigides et les parois latérales flexibles.

12. Bras articulé selon la revendication 11, **caractérisé en ce que** les bandes externes et internes (6.1, 6.2) sont en polyamide, polyéthylène ou polypropylène.

13. Bras articulé selon la revendication 11, **caractérisé en ce que** les parois latérales sont en caoutchouc ou gomme.

14. Bras articulé selon la revendication 1, **caractérisé en ce qu'**il est pourvu d'une vis sans tête (4) ayant une longueur appropriée pour qu'elle soit coincée par la bande interne (6.1) à une extrémité et logée dans une encoche centrale dans une goupille (5) à l'autre extrémité pour le serrage de la goupille (5).
